# EUROPÄISCHE PATENTSCHRIFT

(11) **EP 1 283 471 B1**
(45) Veröffentlichungstag und Bekanntmachung des Hinweises auf die Patenterteilung: **23.02.2011**
(21) Anmeldenummer: 02017377.9
(22) Anmeldetag: 02.08.2002
(51) Int. Cl.: G06F 11/36

(54) **Programmgesteuerte Einheit**
Program controlled unit
Unité commandée par programme

(30) Priorität: 08.08.2001 DE 10138918
(43) Veröffentlichungstag der Anmeldung: 12.02.2003
(60) Teilanmeldung: 10011751.4
(73) Patentinhaber: Infineon Technologies AG, 85579 Neubiberg (DE)
(72) Erfinder: Maier, Klaus, Dr., Kent CT14 7ET (GB)
(74) Vertreter: Repkow, Ines

(56) Entgegenhaltungen:
- EP-A- 0 764 903
- EP-A2- 0 313 848
- MACNAMEE C: "EIN INTERFACE FUER ALLE NEXUS ALS GLOBALER DEBUG-STANDARD" ELEKTRONIKPRAXIS, VOGEL, WUERZBURG, DE, Nr. 3, 8. Februar 2000 (2000-02-08), Seiten 104-106,108, XP008001346 ISSN: 0341-5589

## Beschreibung

Die vorliegende Erfindung betrifft eine Vorrichtung gemäß dem Oberbegriff des Patentanspruchs 1, d.h. eine programmgesteuerte Einheit, mit einem Core zur Ausführung des von der programmgesteuerten Einheit auszuführenden Programmes, und mit Debug-Ressourcen zur Verfolgung und Beeinflussung der innerhalb des Core ablaufenden Vorgänge.

Dokument EP-A-0 764 903 wird als nächstliegender Stand der Technik betrachtet, weil es alle Merkmale des Oberbegriffs des Anspruchs 1 aufweist.

Programmgesteuerte Einheiten wie Mikroprozessoren, Mikrocontroller, Signalprozessoren etc. sind in unzähligen Ausführungsformen bekannt und bedürfen keiner näheren Erläuterung.

Ein bekanntes Problem von programmgesteuerten Einheiten besteht darin, daß es häufig nicht oder nicht ohne weiteres möglich ist, auftretende Fehler zu lokalisieren und zu beheben.

Aus diesem Grund ist man dazu übergegangen, programmgesteuerte Einheiten mit Debug-Ressourcen auszustatten, durch welche die innerhalb der programmgesteuerten Einheit ablaufenden Vorgänge verfolgt und beeinflußt werden können. Zu diesen Debug-Ressourcen gehören beispielsweise die bekannten On-Chip-Debug-Support-Module bzw. OCDS-Module.

Solche und andere Debug-Ressourcen ermöglichen es, das Auftreten von von außerhalb der programmgesteuerten Einheit vorgebbaren Zuständen oder Ereignissen innerhalb der programmgesteuerten Einheit zu überwachen und dann, wenn ein solcher Zustand oder ein solches Ereignis aufgetreten ist, von außerhalb der programmgesteuerten Einheit vorgebbare Aktionen durchzuführen.

Die Zustände oder Ereignisse, deren Auftreten durch die Debug-Ressourcen überwachbar sind, können beispielsweise, aber bei weitem nicht ausschließlich umfassen:
- den Zugriff der programmgesteuerten Einheit oder bestimmter Komponenten derselben auf bestimmte Speicheradressen oder Register, und/oder
- den Transfer bestimmter Daten innerhalb der programmgesteuerten Einheit, und/oder
- den Stand des Instruction Pointers.

Die Aktionen, die die Debug-Ressourcen beim Auftreten eines solchen oder anderen Zustandes oder Ereignisses ausführen, können beispielsweise, aber ebenfalls nicht ausschließlich umfassen:
- eine Meldung des Umstandes, daß die zu überwachende Bedingung eingetreten ist, an eine außerhalb der programmgesteuerten Einheit vorgesehene Einrichtung,
- das Auslesen oder das Verändern des Inhalts bestimmter Speicherelemente oder Register,
- die Ausgabe von Trace-Informationen, d.h. die Ausgabe von innerhalb der programmgesteuerten Einheit transferierten oder verwendeten Adressen, Daten und/oder Steuersignalen, an eine außerhalb der programmgesteuerten Einheit vorgesehenen Einrichtung,
- das Anhalten der Programmausführung,
- die Fortsetzung des Programmausführung im sogenannten Single-Step-Modus, oder
- das Ausführen von zum Debuggen oder Emulieren der programmgesteuerten Einheit dienenden Routinen.

Das Vorsehen solcher Debug-Ressourcen in programmgesteuerten Einheiten bietet somit eine ganze Reihe von Möglichkeiten, in der programmgesteuerten Einheit auftretende Fehler zu lokalisieren und zu beheben.

Ein bekannter Nachteil solcher Debug-Ressourcen besteht darin, daß es damit häufig nicht möglich ist, die programmgesteuerte Einheit in Echtzeit zu untersuchen. Beispielsweise wenn die Debug-Ressourcen den Core der programmgesteuerten Einheit dazu veranlassen,
- die Programmausführung anzuhalten, oder
- die Programmausführung im Single-Step-Modus fortzusetzen, oder
- Befehle auszuführen, die nicht zum eigentlich auszuführenden (Anwendungs-)Programm gehören, sondern zum Debuggen oder Emulieren der programmgesteuerten Einheit dienende Befehle sind,
verhält sich die programmgesteuerte Einheit häufig anders als es im normalen Betrieb derselben der Fall ist. Die Folge hiervon ist, daß Fehler, die im normalen Betrieb der programmgesteuerten Einheit auftreten, während des Debuggens oder Emulierens der programmgesteuerten Einheit unter Verwendung der Debug-Ressourcen häufig nicht auftreten, und/oder daß während des Debuggens oder Emulierens der programmgesteuerten Einheit unter Verwendung der Debug-Ressourcen bisweilen Fehler auftreten, die im normalen Betrieb der programmgesteuerten Einheit nicht auftreten.

Dies schränkt die Einsatzmöglichkeiten der Debug-Ressourcen stark ein. Insbesondere können in komplexen programmgesteuerten Einheiten oder Anwendungen auftretende Fehler durch die Debug-Ressourcen häufig nicht oder nur teilweise, oder nur mit sehr großem Aufwand lokalisiert und behoben werden.

Der vorliegenden Erfindung liegt daher die Aufgabe zugrunde, die programmgesteuerte Einheit gemäß dem Oberbegriff des Patentanspruchs 1 derart weiterzubilden, daß darin auftretende Fehler unter allen Umständen schnell und einfach lokalisiert und behoben werden können.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß die Debug-Ressourcen in der Lage sind, auch andere Komponenten der programmgesteuerten Einheit als den Core derselben und/oder die Kooperation dieser Komponenten untereinander und/oder mit dem Core zu beeinflussen.

Dadurch lassen sich Probleme vermeiden, die bei herkömmlichen programmgesteuerten Einheiten auftreten, wenn die Debug-Ressourcen den Core in einen Zustand versetzen, in welchem sich dieser anders verhält als im normalen Betrieb. Insbesondere lassen sich dadurch die Probleme vermeiden, die daraus resultieren, daß die Komponenten der programmgesteuerten Einheit bei einem veränderten Verhalten des Core nicht mehr wie beabsichtigt arbeiten und/oder kooperieren.

Durch die Möglichkeit, nicht nur den Core, sondern auch andere Komponenten der programmgesteuerten Einheit in einen Zustand zu versetzen, in welchem sich diese anders verhalten als im normalen Betrieb, kann das Verhalten der anderen Komponenten an das veränderte Verhalten des Core angepaßt werden. Vorzugsweise wird vorgesehen, daß die Debug-Ressourcen dann, wenn sie den Core der programmgesteuerten Einheit in einen Zustand versetzen, in welchem dieser sich anders verhält als im normalen Betrieb, automatisch gleichzeitig die anderen Komponenten der programmgesteuerten Einheit an das veränderte Verhalten des Core anpaßt.

Dadurch kann auf einfache Art und Weise weitestgehend vermieden werden, daß während des Debuggens oder Emulierens der programmgesteuerten Einheit Störungen oder Fehler auftreten, die im normalen Betrieb der programmgesteuerten Einheit nicht auftreten, und/oder daß im normalen Betrieb der programmgesteuerten Einheit auftretende Fehler während des Debuggens oder Emulierens der programmgesteuerten Einheit nicht auftreten.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher beschrieben. Es zeigen
- Figur 1: den Aufbau einer programmgesteuerten Einheit gemäß einem ersten Ausführungsbeispiel der Erfindung, und
- Figur 2: den Aufbau einer programmgesteuerten Einheit gemäß einem zweiten Ausführungsbeispiel der Erfindung.

Bei der im folgenden beschriebenen programmgesteuerten Einheit handelt es sich um einen Mikrocontroller. Es sei jedoch bereits an dieser Stelle darauf hingewiesen, daß die nachfolgend beschriebenen Besonderheiten des Mikrocontrollers auch in beliebigen anderen programmgesteuerten Einheiten wie Mikroprozessoren, Signalprozessoren, etc. vorgesehen werden können.

Die im folgenden beschriebenen programmgesteuerten Einheiten zeichnen sich dadurch aus, daß deren Debug-Ressourcen in der Lage sind, nicht nur den Core, sondern auch andere Komponenten der programmgesteuerten Einheit und/oder die Kooperation dieser Komponenten untereinander und/oder mit dem Core zu beeinflussen.

Der Vollständigkeit halber sei bereits an dieser Stelle darauf hingewiesen, daß von den betrachteten programmgesteuerten Einheiten nur die vorliegend besonders interessierenden Komponenten gezeigt und beschrieben sind.

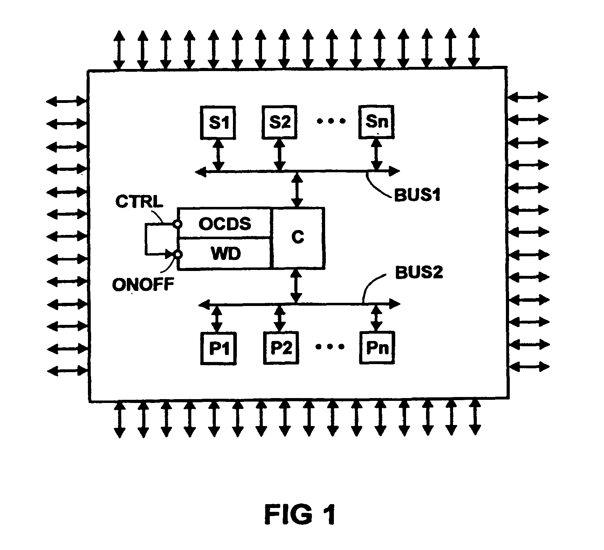

Die in der Figur 1 gezeigte programmgesteuerte Einheit enthält einen Core C, über einen ersten Bus BUS1 mit dem Core C verbundene Speichereinrichtungen S1 bis Sn, über einen zweiten Bus BUS2 mit dem Core C verbundene Peripherieeinheiten P1 bis Pn, einen Watchdog-Timer WD, und ein OCDS-Modul OCDS.

Der Core C liest aus den Speichereinrichtungen S1 bis Sn oder aus einer in der Figur 1 nicht gezeigten, außerhalb des Mikrocontrollers vorgesehenen externen Speichereinrichtung Befehle und Operanden repräsentierende Daten aus und führt diese aus.

Die Speichereinrichtungen S1 bis Sn können durch ein ROM, einen Flashspeicher, ein RAM, oder durch beliebige andere Speichereinrichtungen gebildet werden.

Die Peripherieeinheiten P1 bis Pn sind beispielsweise ein A/D-Wandler, ein Timer, eine Codiereinrichtung, ein DMA-Controller, ein CAN-Controller, ein USB-Controller, oder sonstige in Mikrocontroller integrierbare Einrichtungen.

Der Watchdog-Timer WD ist ein Zähler, welcher
- in einem bestimmten Takt automatisch aufwärts oder abwärts zählt,
- beim Auftreten vorbestimmter Ereignisse zurückgesetzt wird, und
- beim Erreichen eines bestimmten Zählstandes eine bestimmte Aktion ausführt oder veranlaßt, wobei diese Aktion beispielsweise darin besteht, daß der Watchdog-Timer WD entweder die programmgesteuerte Einheit insgesamt, oder aber zumindest den Core C und/oder eine oder mehrere andere Komponenten der programmgesteuerten Einheit zurücksetzt oder in einen bestimmten anderen Zustand versetzt.

Der Aufbau, die Funktion und die Wirkungsweise von Watchdog-Timern sind bekannt, so daß auf die Beschreibung weiterer Einzelheiten verzichtet werden kann.

Das OCDS-Modul OCDS ist ein OCDS-Modul der eingangs beschriebenen Art, weist aber demgegenüber einige Besonderheiten auf. Der Vollständigkeit halber sei angemerkt, daß das OCDS-Modul über einen oder mehrere Ein- und/oder Ausgangsanschlüsse der programmgesteuerten Einheit, beispielsweise über ein JTAGoder ein NEXUS-Interface mit einer außerhalb der programmgesteuerten Einrichtung vorgesehenen Einrichtung verbunden werden kann. Diese externe Einrichtung steuert das OCDS-Modul, d.h. gibt dem OCDS-Modul vor, wann es welche Aktionen durchzuführen hat, und wertet vom OCDS-Modul ausgegebene Informationen aus.

Die erwähnten Besonderheiten des OCDS-Moduls bestehen im betrachteten Beispiel darin, daß das OCDS-Modul den Watchdog-Timer automatisch deaktiviert, wenn das OCDS-Modul eine Aktion ausführt, durch die das Verhalten der programmgesteuerten Einheit verändert wird.

Die genannte Aktion ist eine Aktion,
- durch welche die Ausführung des von der programmgesteuerten Einheit auszuführenden Programms angehalten oder unterbrochen wird, oder
- durch welche die Geschwindigkeit verändert wird, mit welcher das von der programmgesteuerten Einheit auszuführende Programms ausgeführt wird, also beispielsweise das Versetzen der programmgesteuerten Einheit in den Single-Step-Mode, oder
- durch welche die programmgesteuerte Einheit, genauer gesagt der Core C derselben zur Ausführung von Befehlen veranlaßt wird, die nicht Bestandteil des von der programmgesteuerten Einheit eigentlich auszuführenden (Anwendungs-)Programms sind, sondern oder zum Debuggen oder zum Emulieren der programmgesteuerten Einheit dienende Befehle sind.

Das Deaktivieren des Watchdog-Timers WD erfolgt dadurch, daß das OCDS-Modul ein Deaktivierungssignal ausgibt, welches dem Watchdog-Timer, genauer gesagt einem zur Aktivierung und Deaktivierung desselben vorgesehenen Anschluß ONOFF über eine Steuerleitung CTRL zugeführt wird.

Das Deaktivieren des Watchdog-Timer WD erfolgt in den vorstehend genannten Situationen automatisch, d.h. ohne Ausführung eines speziellen Befehls und ohne gesonderte Veranlassung durch die das OCDS-Modul steuernde externe Einrichtung.

Normalerweise, d.h. bei programmgesteuerten Einheiten ohne das vorliegend verwendete OCDS Modul erfolgt die Aktivierung und Deaktivierung des Watchdog-Timers WD ausschließlich über eine mit dem Anschluß ONOFF des Watchdog-Timers verbundene, in der Figur 1 nicht gezeigte Systemsteuereinheit (system control unit), wobei diese Systemsteuereinheit durch von der programmgesteuerten Einheit ausgeführte Befehle oder durch eine die programmgesteuerte Einheit nach dem Rücksetzen derselben initialisierende Logik zur Aktivierung und Deaktivierung des Watchdog-Timers veranlaßt wird. D.h., daß bei programmgesteuerten Einheiten ohne das vorliegend verwendete OCDS-Modul ein spezieller Befehl zur Ausführung gebracht werden müßte, um den Watchdog-Timer während des Debuggens oder Emulierens der programmgesteuerten Einheit zurücksetzen zu können.

Die durch das vorliegend verwendete OCDS-Modul durchgeführte automatische Deaktivierung des Watchdog-Timers weist demgegenüber mehrere Vorteile auf. Insbesondere wird dadurch die Bedienung des OCDS-Moduls einfacher, und ferner ist dadurch eine mögliche Fehlerquelle beim Debuggen oder Emulieren ausgeschaltet. Der Grund für den erstgenannten Vorteil liegt darin, daß keine Notwendigkeit mehr besteht, spezielle Aktionen zur Deaktivierung des Watchdog-Timers vorzunehmen. Der Grund für den zweiten Vorteil besteht darin, daß es zuverlässig ausgeschlossen ist, daß der Watchdog-Timer das Debuggen oder Emulieren der programmgesteuerten Einheit stört; ein versehentlich nicht deaktivierter Watchdog-Timer könnte dazu führen, daß die programmgesteuerte Einheit während des Debuggens oder Emulierens derselben zurückgesetzt wird, wobei das Zurücksetzen selbst und/oder die Ursache hierfür nicht ohne weiteres erkennbar sind.

Der Watchdog-Timer WD wird vorzugsweise nach der Beendigung der Vorgänge, auf die hin der Watchdog-Timer deaktiviert wurde, also dann, wenn die programmgesteuerte Einheit das Anwendungsprogramm wieder normal ausführt (nicht angehalten ist, nicht im Single-Step-Modus arbeitet, nicht zum Debuggen oder zum Emulieren dienende Befehle ausführt), wieder aktiviert. Dadurch wird erreicht, daß die programmgesteuerte Einheit - soweit es unter den gegebenen Umständen möglich ist - während des Debuggens oder des Emulieren derselben wie im normalen Betrieb arbeitet.

Durch die vorstehend beschriebene Deaktivierung des Watchdog-Timers WD wird dieser oder zumindest bestimmte Teile desselben abgeschaltet. D.h. ein deaktivierter Watchdog-Timer zählt nicht mehr oder veranlaßt zumindest keine Aktionen mehr, wenn er den Zählstand erreicht, bei dessen Erreichen er im aktivierten Zustand ein Zurücksetzen der programmgesteuerten Einheit oder von Teilen derselben, oder sonstige Aktionen veranlassen würde.

Die Deaktivierung des Watchdog-Timers WD kann auch anders als vorstehend beschrieben durchgeführt werden.

Eine der hierfür geeigneten Möglichkeiten besteht darin, daß das OCDS-Modul den Watchdog-Timer beim Auftreten der Ereignisse, auf die hin der Watchdog-Timer zu deaktivieren ist, eine automatische Umkonfiguration des Watchdog-Timers durchführt. Diese Umkonfiguration kann beispielsweise darin bestehen, daß der Zählstand, bei dessen Erreichen der Watchdog-Timer die programmgesteuerte Einheit oder Teile derselben zurücksetzt, auf einen Wert gesetzt wird, der in Phasen, in welche sich die programmgesteuerte Einheit anders als im normalen Betrieb verhält, nicht erreicht werden kann. Durch eine solche oder eine andere Umkonfiguration kann im Ergebnis der selbe Effekt erzielt werden wie durch die vorstehend beschriebene Deaktivierung des Watchdog-Timers: der Watchdog-Timer setzt die programmgesteuerte Einheit in Phasen, in welche diese sich anders als im normalen Betrieb verhält, nicht zurück.

Eine weitere Möglichkeit zur Deaktivierung des Watchdog-Timers besteht darin, daß das OCDS-Modul den Watchdog-Timer in Phasen, in welchen sich die programmgesteuerte Einheit anders als im normalen Betrieb verhält, regelmäßig zurücksetzt. Auch hierdurch kann erreicht werden, daß der Watchdog-Timer die programmgesteuerte Einheit in Phasen, in welche diese sich anders als im normalen Betrieb verhält, nicht zurücksetzt.

Die Deaktivierung des Watchdog-Timers kann ferner dadurch erfolgen, daß das OCDS-Modul dafür sorgt, daß die Erzeugung oder die Zufuhr des Taktsignals, in Abhängigkeit von welchem der Watchdog-Timer zählt, unterbunden wird. Alternativ könnte vorgesehen werden, daß dem Watchdog-Timer ein Taktsignal mit einer niedrigeren Frequenz zugeführt wird. Auch durch diese Maßnahmen kann erreicht werden, daß der Watchdog-Timer die programmgesteuerte Einheit in Phasen, in welche diese sich anders als im normalen Betrieb verhält, nicht zurücksetzt.

Der Vollständigkeit halber sei darauf hingewiesen, daß das OCDS-Modul auch die genannten Alternativen zur zuerst beschriebenen Deaktivierung des Watchdog-Timers automatisch durchführt, wenn sich die programmgesteuerte Einheit anders als im normalen Betrieb verhält.

Unabhängig von alledem kann vorgesehen werden, daß das OCDS-Modul zusätzlich zum Watchdog-Timer oder anstelle des Watchdog-Timers weitere bzw. andere Komponenten automatisch deaktiviert, wenn sich die programmgesteuerte Einheit anders als im normalen Betrieb verhält. Eine Komponente, bei der sich dies als vorteilhaft erweisen könnte, ist beispielsweise, aber ganz offensichtlich nicht ausschließlich ein DMA-Controller.

Die automatische Deaktivierung des Watchdog-Timers oder sonstiger Komponenten der programmgesteuerten Einheit kann auch durch andere Debug-Ressourcen als ein OCDS-Modul durchgeführt werden.

Ferner kann vorgesehen werden, daß das OCDS-Modul den Watchdog-Timer oder sonstige Komponenten der programmgesteuerten Einheit anders als durch eine Deaktivierung beeinflußt. Welche Beeinflussungen dies sein können, hängt vom jeweiligen Einzelfall ab. Ziel ist es jeweils, das Verhalten der beeinflußten Komponenten durch die Beeinflussung möglichst optimal an das veränderte Verhalten des Core anzupassen. Optimale Anpassung bedeutet hierbei, daß die beeinflußten Komponenten aufgrund der Beeinflussung so arbeiten und kooperieren, daß während des Debuggens oder Emulierens der programmgesteuerten Einheit genau die im normalen Betrieb der programmgesteuerten Einheit auftretenden Fehler und Störungen auftreten, d.h. nach Möglichkeit nicht mehr, nicht weniger, und nicht andere Fehler und Störungen auftreten als im normalen Betrieb der programmgesteuerten Einheit.

Es kann auch vorgesehen werden, daß das OCDS-Modul oder sonstige Debug-Ressourcen automatisch die Kooperation bestimmter Komponenten untereinander und/oder mit dem Core beeinflussen, wenn sich die programmgesteuerte Einheit anders als im normalen Betrieb verhält. Der Vollständigkeit halber sei bereits an dieser Stelle darauf hingewiesen, daß dies unabhängig von der vorstehend beschriebenen Deaktivierung erfolgen kann.

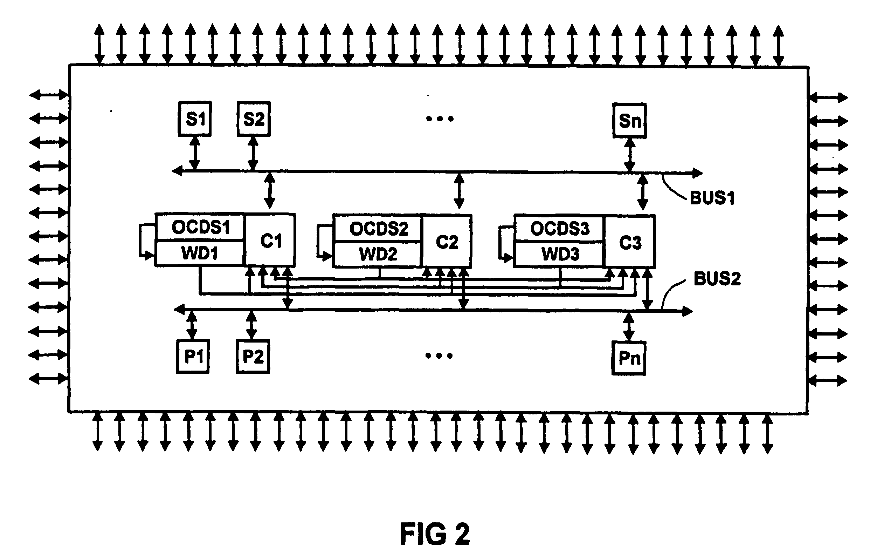

Eine programmgesteuerte Einheit, bei welcher dies der Fall ist, ist in Figur 2 gezeigt.

Die in der Figur 2 gezeigte programmgesteuerte Einheit enthält
- mehrere Cores, genauer gesagt einen ersten Core C1, einen zweiten Core C2, und einen dritten Core C3,
- mehrere Watchdog-Timer, genauer gesagt einen dem ersten Core C1 zugeordneten ersten Watchdog-Timer WD1, einen dem zweiten Core C2 zugeordneten zweiten Watchdog-Timer WD2, und einen dem dritten Core C3 zugeordneten dritten Watchdog-Timer WD3,
- ein aus drei Komponenten bestehendes OCDS-Modul, genauer gesagt eine dem ersten Core C1 zugeordnete erste OCDS-Modulkomponente OCDS1, eine dem zweiten Core C2 zugeordnete zweite OCDS-Modulkomponente OCDS2, und eine dem dritten Core C3 zugeordnete dritte OCDS-Modulkomponente OCDS3,
und entspricht im übrigen der in der Figur 1 gezeigten programmgesteuerten Einheit, d.h. enthält diverse Speichereinrichtungen S1 bis Sn und Peripherieeinheiten P1 bis Pn.

Die Speichereinrichtungen S1 bis Sn können gemeinsame Speichereinrichtungen sein, auf welche alle Cores C1 bis C3 zugreifen können, es kann sich aber auch um private Speichereinrichtungen handeln, auf die jeweils nur ein bestimmter Core zugreifen kann. Entsprechendes gilt für die Peripherieeinheiten.

Die Speichereinrichtungen S1 bis Sn sowie die Peripherieeinheiten P1 bis Pn entsprechen im übrigen den Speichereinrichtungen und Peripherieeinheiten der programmgesteuerten Einheit gemäß Figur 1.

Die Cores C1 bis C3 arbeiten parallel. Sie lesen aus den Speichereinrichtungen S1 bis Sn oder aus einer in der Figur 2 nicht gezeigten, außerhalb des Mikrocontrollers vorgesehenen externen Speichereinrichtung Befehle und Operanden repräsentierende Daten aus und führen diese aus.

Die Watchdog-Timer WD1 bis WD3 entsprechen jeweils dem Watchdog-Timer WD der programmgesteuerten Einheit gemäß Figur 1. D.h., es handelt sich jeweils um Zähler, welche
- in einem bestimmten Takt automatisch aufwärts oder abwärts zählen,
- beim Auftreten vorbestimmter Ereignisse zurückgesetzt werden, und
- beim Erreichen eines bestimmten Zählstandes eine bestimmte Aktion ausführen oder veranlassen, wobei diese Aktion beispielsweise darin besteht, daß die Watchdog-Timer entweder die programmgesteuerte Einheit insgesamt, oder aber zumindest einen oder mehrere Cores und/oder eine oder mehrere andere Komponenten der programmgesteuerten Einheit zurücksetzen oder in einen bestimmten anderen Zustand versetzen.

Obgleich die Watchdog-Timer WD1 bis WD3 jeweils einem bestimmten Core zugeordnet sind, kann jeder der Watchdog-Timer bei Erreichen des bestimmten Zählstandes einen oder mehrere beliebige Cores zurücksetzen. Welcher Watchdog-Timer welchen Core oder welche Cores zurücksetzt, ist in den Watchdog-Timern oder einer in der Figur 2 nicht gezeigten Steuereinrichtung einstellbar.

Die OCDS-Modulkomponenten OCDS1 bis OCDS3 entsprechen jeweils dem OCDS-Modul OCDS der programmgesteuerten Einheit gemäß Figur 1. Sie weisen demgegenüber jedoch einige weitere Besonderheiten auf.

Diese Besonderheiten bestehen im betrachteten Beispiel darin, daß die OCDS-Modulkomponenten dann, wenn sie eine Aktion ausführen, durch die das Verhalten eines der Cores verändert wird, automatisch die Einstellung verändern, durch welche festgelegt ist, welcher Watchdog-Timer welchen Core zurücksetzen kann.

Die genannten Aktionen sind diejenigen Aktionen, bei welchen das OCDS-Modul OCDS der programmgesteuerten Einheit gemäß Figur 1 den Watchdog-Timer WD deaktiviert.

Dadurch kann, um nur eines von nahezu unbegrenzt vielen Beispielen zu nennen, eine Einstellung, bei welcher jeder Watchdog-Timer jeweils alle Cores zurücksetzt, dahingehend verändert werden, daß jeder Watchdog-Timer nur jeweils diejenigen Cores zurücksetzt, welchen er nicht zugeordnet ist.

Dabei können die verschiedenen OCDS-Modulkomponenten OCDS1 bis OCDS3 verschiedene Veränderungen der Einstellungen durchführen. Beispielsweise kann vorgesehen werden,
- daß die erste OCDS-Modulkomponente OCDS1 im Fall, daß durch sie veranlaßt wird, daß der Core, welchem sie zugeordnet ist, also der Core C1 sich anders als im normalen Betrieb verhält (z.B. angehalten wird, oder im Single-Step-Modus betrieben wird, oder zum Debuggen oder Emulieren dienende Befehle ausführt) die bestehende Einstellung dahingehend verändert, daß der dem Core C1 zugeordnete Watchdog-Timer WD1 keinen der vorhandenen Cores zurücksetzt, und die anderen Watchdog-Timer WD2 und WD3 den Core C2 und/oder den Core C3, aber nicht den Core C1 zurücksetzen können,
- daß die zweite OCDS-Modulkomponente OCDS2 im Fall, daß durch sie veranlaßt wird, daß der Core, welchem sie zugeordnet ist, also der Core C2 sich anders als im normalen Betrieb verhält (z.B. angehalten wird, oder im Single-Step-Modus betrieben wird, oder zum Debuggen oder Emulieren dienende Befehle ausführt) die bestehende Einstellung dahingehend verändert, daß der dem Core C2 zugeordnete Watchdog-Timer WD2 keinen der vorhandenen Cores zurücksetzt, und die anderen Watchdog-Timer WD1 und WD3 den Core C1 und/oder den Core C3, aber nicht den Core C2 zurücksetzen können, und
- daß die dritte OCDS-Modulkomponente OCDS3 im Fall, daß durch sie veranlaßt wird, daß der Core, welchem sie zugeordnet ist, also der Core C3 sich anders als im normalen Betrieb verhält (z.B. angehalten wird, oder im Single-Step-Modus betrieben wird, oder zum Debuggen oder Emulieren dienende Befehle ausführt) die bestehende Einstellung dahingehend verändert, daß der dem Core C3 zugeordnete Watchdog-Timer WD3 keinen der vorhandenen Cores zurücksetzt, und die anderen Watchdog-Timer WD1 und WD2 den Core C1 und/oder den Core C2, aber nicht den Core C3 zurücksetzen können.

Selbstverständlich sind auch beliebige andere Kombinationen möglich.

Ferner kann durch die OCDS-Modulkomponenten auch Einfluß darauf genommen werden, ob und gegebenenfalls welche anderen Komponenten der programmgesteuerten Einheit durch die jeweiligen Watchdog-Timer zurückgesetzt werden.

Vorzugsweise veranlassen die OCDS-Modulkomponenten, daß die Einstellungsveränderungen ganz oder teilweise wieder rückgängig gemacht werden, wenn der Core, dem sie jeweils zugeordnet sind, wieder normal arbeitet (nicht mehr angehalten ist, nicht mehr im Single-Step-Modus arbeitet, und kein zum Debuggen oder Emulieren dienendes Programm ausführt etc.).

Durch die durch die OCDS-Modulkomponenten durchführbaren Einstellungsveränderungen läßt sich die programmgesteuerte Einheit während des Debuggens oder Emulierens derselben in einen Zustand bringen, in welchem das Debuggen oder das Emulieren möglichst wenig gestört werden, und/oder sich die programmgesteuerte Einheit während des Debuggens oder Emulierens - soweit es unter den gegebenen Umständen möglich ist - wie im normalen Betrieb verhält.

Darüber hinaus kann (muß aber nicht) vorgesehen werden, daß die OCDS-Modulkomponenten die Watchdog-Timer wie das OCDS-Modul der programmgesteuerten Einheit gemäß Figur 1 deaktivieren können.

Die beschriebenen programmgesteuerten Einheiten ermöglichen es unabhängig von den Einzelheiten der praktischen Realisierung, daß darin auftretende Fehler unter allen Umständen schnell und einfach lokalisiert und behoben werden können.

### Bezugszeichenliste

- BUSx: Bus
- C, Cx: Core
- CTRL: Steuerleitung
- OCDS, OCDSx: OCDS-Modul
- ONOFF: Steueranschluß
- Px: Peripherieeinheit
- Sx: Speichereinrichtung
- WD, WDx: Watchdog-Timer

## Patentansprüche

1. Programmgesteuerte Einheit, mit einem Core (C; C1-C3) zur Ausführung des von der programmgesteuerten Einheit auszuführenden Programmes, und mit Debug-Ressourcen (OCDS: OCDS1-OCDS3) zur Verfolgung und Beeinflussung der innerhalb des Core ablaufenden Vorgänge,
**dadurch gekennzeichnet, daß** die Debug-Ressourcen Mittel aufweisen, die auch andere Komponenten (WD, P1-Pn, S1-Sn; WD1-MD3, P1-Pn, S1-Sn) der programmgesteuerten Einheit und/oder die Kooperation dieser Komponenten untereinander und/oder mit dem Core zu beeinflussen, wobei die anderen Komponenten hierbei durch die Debug-Ressourcen in einen Zustand versetzt werden, in welchem sie sich anders verhalten als im normalen Betrieb der programmgesteuerten Einheit und wobei
die genannten anderen Komponenten (WD, P1-Pn, S1-Sn; ND1-WD3, P1-Pn, S1-Sn) der programmgesteuerten Einheit Komponenten sind, deren Verhalten Einfluß auf das Verhalten des Core (C; C1-C3) hat.

2. Programmgesteuerte Einheit nach Anspruch 1,
**dadurch gekennzeichnet,**
**daß** die anderen Komponenten (WD, P1-Pn, S1-Sn; WD1-WD3, P1-Pn, S1-Sn) der programmgesteuerten Einheit einen Watchdog-Timer (WD; WD1-WD3) umfassen.

3. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) eine Deaktivierung derselben umfaßt.

4. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) ein Abschalten derselben umfaßt.

5. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) umfaßt, daß die anderen Komponenten in einen bestimmten Zustand versetzt werden.

6. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) ein Zurücksetzen derselben umfaßt.

7. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) ein Umkonfigurieren derselben umfaßt.

8. Programmgesteuerte Einheit nach einem der vorhergehenden Ansprüche,
**dadurch gekennzeichnet,**
**daß** die Beeinflussung der anderen Komponenten (WD, P1-Pn, S1-Sn; WD1-WD3, P1-Pn, S1-Sn) eine Veränderung der diesen zugeführten Signale umfaßt.

9. Programmgesteuerte Einheit nach einem der vorhergehenden Ansprüche,
**dadurch gekennzeichnet,**
**daß** die Beeinflussung der Kooperation ein Unterbinden der Kooperation umfaßt.

10. Programmgesteuerte Einheit nach einem der vorhergehenden Ansprüche,
**dadurch gekennzeichnet,**
**daß** die Beeinflussung der Kooperation umfaßt, daß eine Kooperation von normalerweise nicht kooperierenden Komponenten veranlaßt wird.

11. Programmgesteuerte Einheit nach einem der vorhergehenden Ansprüche,
**dadurch gekennzeichnet,**
**daß** die Debug-Ressourcen die Beeinflussung der anderen Komponenten (WD, P1-Pn, S1-Sn: WD1-WD3, P1-Pn, S1-Sn) und/oder der Kooperation dieser Komponenten untereinander und/oder mit dem Core (C; C1-C3) automatisch beim Auftreten bestimmter Ereignisse durchführen.

12. Programmgesteuerte Einheit nach Anspruch 11,
**dadurch gekennzeichnet,**
**daß** die bestimmten Ereignisse darin bestehen, daß durch von den Debug-Ressourcen (OCDS, OCDS1-OCDS3) ausgeführte Aktionen das Verhalten der programmgesteuerten Einheit verändert wird.

13. Programmgesteuerte Einheit nach Anspruch 11 oder 12,
**dadurch gekennzeichnet,**
**daß** die bestimmten Ereignisse darin bestehen, daß durch von den Debug-Ressourcen (OCDS; OCDS1-OCDS3) ausgeführte Aktionen das Verhalten des Core (C; C1-C3) verändert wird.

14. Programmgesteuerte Einheit nach einem der Ansprüche 11 bis 13,
**dadurch gekennzeichnet,**
**daß** die bestimmten Ereignisse das Ereignis umfassen, daß die Debug-Ressourcen (OCDS; OCDS1-OCDS3) die Ausführung des von der programmgesteuerten Einheit auszuführenden Programms anhalten.

15. Programmgesteuerte Einheit nach einem der Ansprüche 11 bis 14,
**dadurch gekennzeichnet,**
**daß** die bestimmten Ereignisse das Ereignis umfassen, daß die Debug-Ressourcen (OCDS; OCDS1-OCDS3) die Geschwindigkeit verändern, mit welcher das von der programmgesteuerten Einheit auszuführende Programm ausgeführt wird.

16. Programmgesteuerte Einheit nach einem der Ansprüche 11 bis 15,
**dadurch gekennzeichnet,**
**daß** die bestimmten Ereignisse das Ereignis umfassen, daß die Debug-Ressourcen (OCDS; OCDS1-OCDS3) den Core (C; C1-C3) dazu veranlassen, das auszuführende Programm im Single-Step-Modus auszuführen.

17. Programmgesteuerte Einheit nach einem der Ansprüche 11 bis 16,
**dadurch gekennzeichnet,**
**daß** die bestimmten Ereignisse das Ereignis umfassen, daß die Debug-Ressourcen (OCDS; OCDS1-OCDS3) veranlassen, daß durch die programmgesteuerte Einheit Befehle ausgeführt werden, die nicht Bestandteil des von der programmgesteuerten Einheit eigentlich auszuführenden Anwendungsprogramms sind.

18. Programmgesteuerte Einheit nach einem der Ansprüche 11 bis 17,
**dadurch gekennzeichnet,**
**daß** die bestimmten Ereignisse das Ereignis umfassen, daß die Debug-Ressourcen (OCDS; OCDS1-0CDS3) veranlassen, daß durch die programmgesteuerte Einheit Befehle ausgeführt werden, die Teil eines zum Debuggen oder Emulieren der programmgesteuerten Einheit dienenden Programms sind.

## Claims

1. Program-controlled unit, having a core (C; C1 C3) for executing the program which is to be executed by the program-controlled unit, and having debug resources (OCDS; OCDS1 - OCDS3) for tracking and influencing the processes taking place within the core,
**characterized**
**in that** the debug resources have means which also influence other components (WD, P1 - Pn, S1 - Sn; WD1 - WD3, P1 - Pn, S1 Sn) of the program-controlled unit and/or influence the cooperation of said components with one another and/or with the core, wherein the other components are put by the debug resources into a state in which they behave differently than during normal operation of the program-controlled unit and wherein said other components (WD, P1 - Pn, S1 Sn; WD1 - WD3, P1 Pn, S1 Sn) of the program-controlled unit are components, the behaviour of which influences the behaviour of the core (C; C1 C3).

2. Program-controlled unit according to Claim 1,
**characterized**
**in that** the other components (WD, P1 Pn, S1 - Sn; WD1 - WD3, P1 - Pn, S1 Sn) of the program-controlled unit comprise a watchdog timer (WD; WD1 - WD3).

3. Program-controlled unit according to either of the preceding claims,
**characterized**
**in that** the influence on the other components (WD, P1 - Pn, S1 Sn; WD1 - WD3, P1 - Pn, S1 Sn) comprises deactivation thereof.

4. Program-controlled unit according to one of the preceding claims,
**characterized**
**in that** the influence on the other components (WD, P1 Pn, S1 Sn; WD1 - WD3, P1 - Pn, S1 Sn) comprises disconnection thereof.

5. Program-controlled unit according to one of the preceding claims,
**characterized**
**in that** the influence on the other components (WD, P1 - Pn, S1 Sn; WD1 - WD3, P1 Pn, S1 Sn) comprises the other components being put into a particular state.

6. Program-controlled unit according to one of the preceding claims,
**characterized**
**in that** the influence on the other components (WD, P1 Pn, S1 Sn; WD1 - WD3, P1 - Pn, S1 Sn) comprises reset thereof.

7. Program-controlled unit according to one of the preceding claims,
**characterized**
**in that** the influence on the other components (WD, P1 Pn, S1 Sn; WD1 - WD3, P1 - Pn, S1 Sn) comprises reconfiguration thereof.

8. Program-controlled unit according to one of the preceding claims,
**characterized**
**in that** the influence on the other components (WD, P1 - Pn, S1 - Sn; WD1 - WD3, P1 - Pn, S1 Sn) comprises alteration of the signals supplied thereto.

9. Program-controlled unit according to one of the preceding claims,
**characterized**
**in that** the influence on the cooperation comprises prevention of the cooperation.

10. Program-controlled unit according to one of the preceding claims,
**characterized**
**in that** the influence on the cooperation comprises cooperation being prompted by normally non-cooperating components.

11. Program-controlled unit according to one of the preceding claims,
**characterized**
**in that** the debug resources implement the influence on the other components (WD, P1 - Pn, S1 - Sn; WD1 - WD3, P1 - Pn, S1 - Sn) and/or the cooperation of said components with one another and/or with the core (C; C1 C3) automatically when particular events occur.

12. Program-controlled unit according to Claim 11,
**characterized**
**in that** the particular events involve actions performed by the debug resources (OCDS, OCDS1 - OCDS3) altering the behaviour of the program-controlled unit.

13. Program-controlled unit according to Claim 11 or 12,
**characterized**
**in that** the particular events involve actions performed by the debug resources (OCDS; OCDS1 - OCDS3) altering the behaviour of the core (C; C1 - C3).

14. Program-controlled unit according to one of Claims 11 to 13,
**characterized**
**in that** the particular events comprise the event that the debug resources (OCDS; OCDS1 - OCDS3) stop the execution of the program which is to be executed by the program-controlled unit.

15. Program-controlled unit according to one of Claims 11 to 14,
**characterized**
**in that** the particular events comprise the event that the debug resources (OCDS; OCDS1 - OCDS3) alter the speed at which the program which is to be executed by the program-controlled unit is executed.

16. Program-controlled unit according to one of Claims 11 to 15,
**characterized**
**in that** the particular events comprise the event that the debug resources (OCDS; OCDS1 - OCDS3) prompt the core (C; C1 - C3) to execute the program which is to be executed in single-step mode.

17. Program-controlled unit according to one of Claims 11 to 16,
**characterized**
**in that** the particular events comprise the event that the debug resources (OCDS; OCDS1 - OCDS3) prompt the program-controlled unit to execute commands which are not part of the application program which is actually to be executed by the program-controlled unit.

18. Program-controlled unit according to one of Claims 11 to 17,
**characterized**
**in that** the particular events comprise the event that the debug resources (OCDS; OCDS1 - OCDS3) prompt the program-controlled unit to execute commands which are part of a program which is used to debug or emulate the program-controlled unit.

## Revendications

1. Unité programmable comprenant un noyau (C ; C1-C3) pour exécuter le programme à exécuter par l'unité programmable et comprenant des ressources de débogage (OCDS ; OCDS1-OCDS3) pour suivre et influencer les opérations qui se déroulent à l'intérieur du noyau,
**caractérisée en ce**
**que** les ressources de débogage présentent des moyens qui influencent également d'autres composants (WD, P1-Pn, S1-Sn ; WD1-WD3, P1-Pn, S1-Sn) de l'unité programmable et/ou la coopération de ces composants entre eux et/ou avec le noyau, les autres composants étant ici mis par les ressources de débogage dans un état dans lequel il se comportent différemment que pendant le fonctionnement normal de l'unité programmable et
lesdits autres composants (WD, P1-Pn, S1-Sn ; WD1-WD3, P1-Pn, S1-Sn) de l'unité programmable étant des composants dont le comportement a une influence sur le comportement du noyau (C ; C1-C3).

2. Unité programmable selon la revendication 1, **caractérisée en ce que** les autres composants (WD, P1-Pn, S1-Sn ; WD1-WD3, P1-Pn, S1-Sn) de l'unité programmable comprennent un chien de garde (WD ; WD1-WD3).

3. Unité programmable selon l'une des revendications précédentes, **caractérisée en ce que** l'influence des autres composants (WD, P1-Pn, S1-Sn ; WD1-WD3, P1-Pn, S1-Sn) inclut une désactivation de ceux-ci.

4. Unité programmable selon l'une des revendications précédentes, **caractérisée en ce que** l'influence des autres composants (WD, P1-Pn, S1-Sn ; WD1-WD3, P1-Pn, S1-Sn) inclut une mise hors circuit de ceux-ci.

5. Unité programmable selon l'une des revendications précédentes, **caractérisée en ce que** l'influence des autres composants (WD, P1-Pn, S1-Sn ; WD1-WD3, P1-Pn, S1-Sn) inclut le placement des autres composants dans un état donné.

6. Unité programmable selon l'une des revendications précédentes, **caractérisée en ce que** l'influence des autres composants (WD, P1-Pn, S1-Sn ; WD1-WD3, P1-Pn, S1-Sn) inclut une réinitialisation de ceux-ci.

7. Unité programmable selon l'une des revendications précédentes, **caractérisée en ce que** l'influence des autres composants (WD, P1-Pn, S1-Sn ; WD1-WD3, P1-Pn, S1-Sn) inclut une reconfiguration de ceux-ci.

8. Unité programmable selon l'une des revendications précédentes, **caractérisée en ce que** l'influence des autres composants (WD, P1-Pn, S1-Sn ; WD1-WD3, P1-Pn, S1-Sn) inclut une modification des signaux acheminés à ceux-ci.

9. Unité programmable selon l'une des revendications précédentes, **caractérisée en ce que** l'influence de la coopération inclut une inhibition de la coopération.

10. Unité programmable selon l'une des revendications précédentes, **caractérisée en ce que** l'influence de la coopération inclut l'initiation d'une coopération des composants qui normalement ne coopèrent pas.

11. Unité programmable selon l'une des revendications précédentes, **caractérisée en ce que** les ressources de débogage réalisent l'influence des autres composants (WD, P1-Pn, S1-Sn ; WD1-WD3, P1-Pn, S1-Sn) et/ou de la coopération de ces composants entre eux et/ou avec le noyau (C ; C1-C3) automatiquement lorsque des événements donnés se produisent.

12. Unité programmable selon la revendication 11, **caractérisée en ce que** les événements donnés consistent en une modification du comportement de l'unité programmable par des actions exécutées par les ressources de débogage (OCDS ; OCDS1-OCDS3).

13. Unité programmable selon la revendication 11 ou 12, **caractérisée en ce que** les événements donnés consistent en une modification du comportement du noyau (C ; C1-C3) par des actions exécutées par les ressources de débogage (OCDS ; OCDS1-OCDS3).

14. Unité programmable selon l'une des revendications 11 à 13, **caractérisée en ce que** les événements donnés incluent l'événement d'arrêt par les ressources de débogage (OCDS ; OCDS1-OCDS3) de l'exécution du programme à exécuter par l'unité programmable.

15. Unité programmable selon l'une des revendications 11 à 14, **caractérisée en ce que** les événements donnés incluent l'événement de modification par les ressources de débogage (OCDS ; OCDS1-OCDS3) de la vitesse à laquelle est exécuté le programme à exécuter par l'unité programmable.

16. Unité programmable selon l'une des revendications 11 à 15, **caractérisée en ce que** les événements donnés incluent l'événement selon lequel le noyau (C ; C1-C3) se voit ordonner par les ressources de débogage (OCDS ; OCDS1-OCDS3) d'exécuter le programme à exécuter en mode étape par étape.

17. Unité programmable selon l'une des revendications 11 à 16, **caractérisée en ce que** les événements donnés incluent l'événement de commande par les ressources de débogage (OCDS ; OCDS1-OCDS3) de l'exécution par l'unité programmable d'instructions qui ne font pas partie du programme d'application proprement dit à exécuter par l'unité programmable .

18. Unité programmable selon l'une des revendications 11 à 17, **caractérisée en ce que** les événements donnés incluent l'événement de commande par les ressources de débogage (OCDS ; OCDS1-OCDS3) de l'exécution par l'unité programmable d'instructions qui font partie d'un programme servant à déboguer ou à émuler l'unité programmable.
